Europäisches Patentamt

European Patent Office

Office européen des brevets

(19)

(11) Publication number: **0 124 998**
**A2**

(12) # EUROPEAN PATENT APPLICATION

(21) Application number: **84302172.6**

(22) Date of filing: **29.03.84**

(51) Int. Cl.³: **C 01 B 33/20**
**B 01 J 29/04**

(30) Priority: **08.04.83 GB 8309584**

(43) Date of publication of application:
**14.11.84 Bulletin 84/46**

(84) Designated Contracting States:
**BE DE FR GB IT NL SE**

(71) Applicant: **The British Petroleum Company p.l.c.**
**Britannic House Moor Lane**
**London EC2Y 9BU(GB)**

(72) Inventor: **Barri, Sami Ali Ibrahim**
**The British Petroleum Co. p.l.c. Chertsey Road**
**Sunbury-on-Thames Middlesex, TW16 7LN(GB)**

(72) Inventor: **Young, Dennis**
**The British Petroleum Co. p.l.c. Chertsey Road**
**Sunbury-on-Thames Middlesex, TW16 7LN(GB)**

(74) Representative: **Krishnan, Suryanarayana**
**Kalyana et al,**
**c/o The British Petroleum Company plc Patents Division**
**Chertsey Road**
**Sunbury-on-Thames Middlesex TW16 7LN(GB)**

(54) **Crystalline zincosilicate.**

(57) This invention relates to novel porous zincosilicates having a Theta-1 type structure and to a process for preparing the same. The zincosilicates can be loaded with catalytic components e.g. gallium oxide and can be used with or without the catalytic components to catalyse a number of hydrocarbon conversion reactions, dehydration reactions and for the conversion of synthesis gas to hydrocarbons.

EP 0 124 998 A2

Croydon Printing Company Ltd.

1

# CRYSTALLINE ZINCOSILICATE

The present invention relates to a novel porous zincosilicate and to methods of preparing the same. More particularly, this invention relates to a novel crystalline zincosilicate having catalytic properties, to hydrothermal methods for preparing the same, and to hydrocarbon and related conversion reactions therewith.

Zeolites are well known natural and synthetic compositions. Many of them have been demonstrated to have catalytic properties for various types of hydrocarbon and related reactions. Zeolites can be defined as ordered porous crystalline aluminosilicates having a framework structure sufficiently open to accommodate at least water molecules. Such structures generally contain a regular array of small voids interconnected by channels or pores. The dimensions of the voids and channels can range from those of water to those of quite large molecules. For a given framework structure, the dimensions of the voids and channels are limited to a small number of values, which can vary from structure to structure. Thus these structures are capable of absorbing molecules of certain dimensions while rejecting those of dimensions larger than a critical value which varies with structure. This has led to zeolites being used as molecular sieves. Zeolites belong to a class of materials that can be termed tectoaluminosilicates which comprise (in addition to zeolites) felspars and felspathoids. They can be defined as having a framework structure consisting of a rigid regular three dimensional network of $SiO_4$ and $AlO_4$ tetrahedra in which the tetrahedra are cross-linked by sharing the oxygen atoms. All oxygen atoms are shared, thus the ratio of total aluminium and silicon atoms to oxygen atoms is 1:2. The inclusion of aluminium in the framework leads to a net negative charge which is balanced by the inclusion in the crystal of an electrochemical equivalence of cations, for example alkali metal, alkaline earth metal, hydrogen or ammonium cations or mixtures thereof. This can be expressed by a formula in which the ratio of Al to the number of the various cations such as Ca/2, Sr/2, Na, K, Li or generally M/n (where n is the formal oxidation state of the cation) is equal to unity. Additionally in zeolites, but not in felspars and some felspathoids, the framework is sufficiently open to accommodate water molecules as well as cations. This enables these cations to be exchanged in their entirety or partially by other cations using ion-exchange techniques in a conventional manner. These materials can exhibit specific affinities for specific cations and can thus be used as selective ion-exchangers. By means of ion-exchange, it is possible to vary the size of the pores in a given crystalline zeolite material, modifying its molecular sieve properties. Also by means of ion-exchange the catalytic properties of these materials can be altered. In addition to the framework and charge-compensating cations, zeolites can contain other materials such as water and organic molecules, (hydrated) salts and oxides of eg Na, Al and Si introduced during synthesis, or formed or added during subsequent treatments. Zeolites are best characterised according to framework structure type, ie on the topology of the framework, irrespective of composition, distribution of different tetrahedral atoms, cell dimensions and symmetry. A code consisting of three capital letters has been adopted for each known structure type following the recommendations by IUPAC on zeolite nomenclature ("Chemical Nomenclature, and Formulation of Compositions, of Synthetic and Natural Zeolites," IUPAC yellow booklet, 1978) and a compilation of 38 known zeolite structure types has been published by The Structure Commission of the International Zeolite Association ("Atlas of Zeolite Structure Types", by Meier, W.M. and Olsen, D.H. (1978), distributed by Polycrystal Book Service, Pittsburgh, Pa, USA). In addition to the groups classified by known structure type, there is a further group of crystalline zeolite materials whose X-ray diffraction patterns, sorption, ion-exchange and related properties indicate that they do not have known structure types but appear to have new, as yet undetermined structure types. An example of such a material is the novel porous crystalline aluminosilicate designated Theta-1 and described in our published copending European patent specification No 0057049.

Zeolites (and other tectoaluminosilicates) belong to a larger class of materials that can be termed tectometallosilicates which can be defined in the same way as tectoaluminosilicates except that the aluminium is replaced by a range of elements, which includes, it is claimed, Ti, Zr, V, Cr, Mo, Mn, Fe, Co, Rh, Ni, Zn, B, Al, Ga, Ge, Sn, As and Sb, but in some cases the claimed materials have not been well characterised. In some cases (where the element has the same formal oxidation state as Si ie +4) the resultant framework is electroneutral and the resultant materials resemble crystalline silicas. In other cases there is a resultant framework negative charge which must be compensated by cations as in tectoaluminosilicates. In some cases the materials have porous frameworks like those of zeolites or porous crystalline silicas which they therefore resemble.

A number of crystalline zinc silicates, basic zinc silicates and sodium zincosilicates are known. They include zinc metasilicate ($ZnSiO_3$), zinc orthosilicate or willemite $Zn_2SiO_4$ (see Rochow, E.G. in Comprehensive Inorg. Chem., Bailar, J.C. et al, Eds, Vol 1, Pergamon Press, Oxford, 1973) [$Zn_4(OH)_2Si_2O_4$], materials of formula $Na_2Zn_3(SiO_4)_2$ (Plekhov, G., et al, Sov. Phys. Crystallogr., 1975, 20, 24) and $Na_2Zn_2Si_2O_7$ and $Na_4Zn_2Si_3O_{10}$ (Holland and Segnit, Australian J. Chem., 1966, 19, 905-913). These materials are in general characterised by high densities (which signifies low porosities) and low Si/Zn ratios (0.5 to 1.5). The structures reported hitherto are not those of tectozincosilicates; for example that of $Zn_2SiO_4$ is the phenacite ($Be_2SiO_4$) type of structure (Wyckoff, R.W.G, Crystal Structures, 2nd Ed, Interscience NY (1963-5), containing three-coordinate oxygen atoms, while $Zn_4(OH)_2Si_2O_7$ contains discrete $Si_2O_7^{6-}$ units (see Rochow, E.G. in Comprehensive Inorg. Chem., Bailar, J.C. et al, Eds, Vol 1,, p 1405, Pergamon Press, Oxford, 1973).

The hydrothermal synthesis in the presence of sodium cations of a porous crystalline zincosilicate has been claimed and described in the published European patent specification No 0027736 in which a crystalline sodium zincosilicate product of idealised stoichiometry $Na_2ZnSiO_4$ is reported to have an LTA structure type but presents no supporting evidence. (LTA is the IUPAC nomenclature for the framework structure type typified by, for instance, zeolite A: see "Chemical Nomenclature, and Formulation of Compositions, of Synthetic and Natural Zeolites," IUPAC yellow booklet, 1978). Crystallinity is said to be destroyed by heating to 250°C. The hydrothermal synthesis of, amongst others, porous crystalline zincosilicates in the presence of a number of templating agents has been claimed and described in eg the published UK patent specifications Nos 2024790 and 2078704. The templating agents used were tertiary amines, aminoalcohols, amino acids, polyalcohols or quaternary ammonium bases such as tetralkyl- or tetraaryl-ammonium bases. Example 3 of both specifications reports the hydrothermal synthesis in the presence of tetrapropylammonium cations of a porous crystalline zincosilicate termed TRS-66. The organic-free hydrogen form of the product has a molar Si/Zn ratio of 15:1 and a BET specific surface area of 380 $m^2$/g. The structure type of the product is not reported but is inferred to be MFI. We have found that the zincosilicates prepared in the presence of tetrapropylammonium cations have the MFI structure type as will be shown later. (See Comparative Test 1).

It has now been found that a novel porous crystalline zincosilicate having a structure type strongly resembling that of Theta-1 aluminosilicate as described in our published European patent specification No 0057049 but with different acidity properties can be produced by crystallisation from a mixture containing a source of silica, a source of zinc oxide, a source of alkali metal(s), water and a template such as a polyalkylene polyamine.

According to the present invention there is provided a novel porous crystalline zincosilicate of the following molar oxide composition:

$$1.8 \pm 0.5 \ M_{2/n}O:ZnO:xSiO_2:yH_2O:zQ$$

wherein M is at least one cation which has a valency of n, x is at least 10, $H_2O$ is water of hydration additional to water notionally present when M is H, y/x is between 0 and 5, Q is a template used in the synthesis of the zincosilicate, and z is 0-20, and wherein the zincosilicate in the calcined hydrogen-form has an X-ray diffraction pattern substantially as set forth in Table A of the specification.

Thus the zincosilicates of the present invention have a Theta-1 type structure as described in our published European patent specification No 0057049.

By the "calcined hydrogen-form" is meant throughout this specification that the zincosilicate is in the calcined state wherein the cation M is hydrogen.

By "template" is meant throughout this specification a chemical agent which encourages crystallisation to proceed towards a particular framework structure or structures.

The $H_2O$ content "y" of the zincosilicate will depend, within the ratios set out above, upon the conditions under which it is dried, calcined, subjected to further aqueous treatments or combinations thereof after synthesis.

The content "z" of template "Q" in the zincosilicate will also depend upon the conditions under which it is washed, calcined or subjected to further aqueous treatments or combinations thereof after synthesis, and also on the synthesis parameters of the zincosilicate, particularly the proportion of Q present in the original hydrogel. The template content is usually highest for the "parent" zincosilicate. Complete removal of the template is usually only possible by thermal or oxidative degradation or both.

By the "parent" zincosilicate is meant throughout this specification the product of synthesis and washing and optionally drying as hereinafter described.

The calcined zincosilicate according to the present invention has the X-ray diffraction pattern shown in Table A below.

The specific values in the Tables were determined using copper K-alpha radiation and a computer step scan.

The peak heights, I, and their position as a function of 2-theta where theta is the Bragg angle, were read from the spectrometer output. From this output the relative intensities $100 \times I/I_0$ where $I_0$ is the intensity of the strongest peak, and d the interplanar spacing in Angstroms, corresponding to the recorded peaks were calculated.

It will be understood by those skilled in the art that the X-ray diffraction pattern of zincosilicates may vary in the values of $I/I_0$ and the d-spacing depending for example upon whether the sample being examined is calcined or uncalcined, upon the temperature of calcination, upon the nature of the cation present in the zincosilicate, the mole ratio of silica to zinc oxide, and the particle size of the zincosilicate.

The zincosilicate is suitably produced from an initial mixture containing a source of silica, a source of zinc oxide, a source of alkali metal(s), water and a template.

The silica to zinc oxide mole ratio in the initial mixture is suitably greater than 10:1, preferably greater than 20:1 and more preferably from 20:1 to 500:1. The free alkali(s) hydroxide to water mole ratio, defined as:

$$\frac{[(\text{Number of moles of total alkali metal(s)}) - (\text{Number of moles of alkali metal(s) required to convert zinc oxide present to alkali metal zincate(s), ie } M_2ZnO_2)]}{\text{Number of moles of water present}}$$

is suitably less than 1:10, preferably less than 1:100, even more preferably from $1 \times 10^{-4}:1$ to $8 \times 10^{-3}:1$. Similarly the mole ratio of silica to free alkali metal(s) hydroxide is suitably greater than 5:1, preferably from 10:1 to 500:1, more preferably from 20:1 to 400:1. The mole ratio of water to silica is suitably less than 500:1, preferably from 6:1 to 100:1, even more preferably in the range 9:1 to 30:1.

The source of silica is suitably selected from sodium silicate, silica gel, silica sol and silicic acid. It is preferably an aqueous colloidal dispersion of silica such as Ludox (Regd. Trade Mark) colloidal silica (manufactured by DuPont).

The source of alkali metal is suitably an inorganic salt, oxide or hydroxide of said metal. Sodium is the preferred metal.

The source of zinc is suitably an inorganic salt, oxide or hydroxide thereof. Zinc nitrate is preferred.

The template is suitably selected from one or more of the following:

(a)  an alkene diamine or a dialkenetriamine or a polyalkylene polyamine which may be ethylene diamine, propylene diamine, butylene diamine, pentylene diamine, diethylene triamine, triethylene tetraamine, tetraethylene pentamine or pentaethylene hexamine, or the like,

(b)  an alkanolamine which may be mono-, di- or tri-alkanol amine and in which the alkanol group is derived from ethanol, propanol or butanol,

(c)  ammonia, and

(d)  an alkylene glycol, a $C_1-C_6$ polyol or a polyoxyalkylene glycol in which the alkylene groups may be ethylene, propylene or butylene.

Of these, the templates referred to in (a) above are most preferred.

The zincosilicate is suitably prepared by forming a mixture of all the reactants, by simply mixing them together while maintaining the mixture suitably at a temperature between 0 to 100°C, preferably between 20 and 60°C, until a homogeneous gel is formed and crystallising the mixture so-formed at a temperature above 70°C, preferably between 100 and 220°C for a period of at least 2 hours, preferably for 6 to 240 hours. The optimum crystallisation period can vary and may depend upon such factors as the temperature, pH and gel composition and seeding. The mixing and digestion of the ingredients is suitably carried out under autogenous pressure although the pressure can be further increased by pressurisation with a suitable gas, eg nitrogen. It is preferable to agitate the mixture during the crystallisation stages. It is preferable that the silica source is added to the other reagents in such a manner as to commence gelation at a relatively high pH.

The product obtained in this manner contains cations which may be hydrogen, alkali metal(s), zinc, organic or inorganic cations or any combination thereof.

The cations in the product may be converted to hydrogen to give rise to the hydrogen-form of the product. This may be achieved by techniques known to those skilled in the art, eg (a) ammonia exchange followed by calcination, (b) acid exchange or a combination of (a) and (b).

The zincosilicate product or the hydrogen-form thereof may also be loaded with additional metals or oxides suitable for imparting a specific type of catalytic activity. The loading may be achieved by conventional ion-exchange, physical mixing or impregnation techniques. The metal compounds which may be used for ion-exchange, mixing and/or impregnation may be compounds of any one of the following metals or groups of metals, namely those belonging to Groups IB, IIB, IIIA, IVA, VA, VIB, VIIB and VIII according to the Periodic Table due to Mendeleef. Specifically, compounds of copper, silver, zinc, aluminium, gallium, indium, thallium, lead, antimony, bismuth, chromium, molybdenum, tungsten, manganese, iron, cobalt, nickel, ruthenium, rhodium, palladium, iridium, platinum, rhenium, thorium and the rare earth metals are preferred.

The crystalline zincosilicates of the present invention may be admixed or bound with other catalytic components or supports such as eg zeolites or other tectosilicates before or after loading with one of the aforementioned metal compounds. The crystalline zincosilicates may be bound with conventional alumina or silica binders before or after loading with the metal compounds to produce an attrition resistant catalyst.

The zincosilicates of the present invention may be used, in some cases impregnated and/or ion-exchanged, admixed, supported or bound with other metal compounds, as catalysts for any of the following reactions: alkylation, dealkylation or transalkylation of aromatics, dehydrocyclodimerisation, aromatisation, isomerisation, dehydrogenation, hydrogenation, cracking, hydrocracking, cyclisation, oligomerisation, polymerisation, etherification and dehydration reactions, particularly dehydration of alcohols and ethers. The zincosilicate may also be used (in conjunction with other active components) for conversion of carbon monoxide/hydrogen mixtures to hydrocarbons. The zincosilicate may be used as catalysts in the form of fixed, fluidised or moving beds.

The present invention is further illustrated with reference to the following Examples.

Example 1

An aqueous solution of zinc nitrate hexahydrate (6.6 in 50 ml water) was adjusted to a pH of about 6 using aqueous ammonia. The zinc hydroxide precipitate obtained was filtered and washed with distilled water and dried at room temperature for 1 hour. The dry solid was then added to a beaker containing aqueous sodium hydroxide solution (125 ml of 0.4 M sodium hydroxide). The mixture so formed was stirred for 10 minutes. Diethylene triamine (70g) was added to the sodium zincate solution and the resultant solution "A" was stirred at room temperature for 10 minutes. 125g of silica gel (Ludox AS40, Regd. Trade Mark) which contained 40% w/w silica was added to solution "A" over a period of 15 minutes with vigorous stirring which was continued for a further 15 minutes. The resultant gel composition:

$$1.13 \ Na_2O:27(C_4H_{13}N_3):ZnO:37.6 \ SiO_2:500 \ H_2O$$

was transferred to a stainless steel pressure vessel and crystallised at 175°C for 72 hours. The crystalline product so formed was filtered, washed with distilled water and dried at 90°C. The crystalline product was found to have an XRD pattern as shown in Table 1 below. This pattern is consistent with the present invention.

0124998

Example 2

An aqueous solution (130g) of zinc oxide (1.8g) and sodium hydroxide (2.0g) was prepared. Diethylenetriamine (70g) was added to the above sodium zincate solution and the resultant clear solution "C" was stirred at room temperature for 10 minutes. 125g of silica gel (Ludox AS40, Registered Trade Mark) which contained 40% w/w silica was added to solution "C" over a period of 15 minutes with vigorous stirring which was continued for a further 15 minutes. The resultant gel composition:

$1.13 \, Na_2O : 33(C_4H_{13}N_3) : ZnO : 37.7 \, SiO_2 : SO_3 \, H_2O$

was transferred to a stainless steel pressure vessel and crystallised at 175°C for 40 hours. The crystalline product so formed was filtered, washed with distilled water and dried at 90°C. The product was found to contain substantial amounts of crystalline material which has an XRD pattern consistent with Table 1 and also contained a small amount of cristobalite.

Comparative Test 1

An aqueous solution of zinc nitrate hexahydrate (5.28g in 5 ml water) was adjusted to a pH of about 6 using aqueous ammonia. The zinc hydroxide precipitate obtained was filtered and washed with distilled water and dried at room temperature for 1 hour. The dry solid was then added to a beaker containing aqueous sodium hydroxide solution (34 CC of 0.74 M). The mixture so formed was stirred until a clear solution was obtained. Aqueous tetrapropylammonium hydroxide solution (20 wt %) (25g) was added to the zincate solution and the resultant solution "B" was stirred at room temperature for 10 minutes. 50g of silica gel (Ludox AS40, Regd. Trade Mark) which contained 40% w/w silica was added to solution B over a period of 15 minutes with vigorous stirring which was continued for a further 15 minutes. The resultant gel of composition

$0.70 \, Na_2O:1.38 \, [(C_{12}H_{32}N)OH]:ZnO:18.8 \, SiO_2:263 \, H_2O$

was transferred to a stainless steel pressure vessel and crystallised at 175°C for 72 hours. The crystalline product so formed was filtered, washed with distilled water and dried at 90°C. The crystalline product was found to have an XRD pattern as shown in Table 2 below which is consistent with the MFI structure type.

0124998

Zincosilicates (Thetanol type)

## TABLE A

| 2-theta | d<br>(Angstroms) | | I/I$_0$ |
|---|---|---|---|
| 7.95 – 8.28 | 11.10 – 10.65 | | 60 – 100 |
| 9.99 – 10.32 | 8.84 – 8.55 | | 10 – 30 |
| 12.60 – 12.97 | 7.01 – 6.81 | | 15 – 40 |
| 16.11 – 16.47 | 5.50 – 5.37 | | 5 – 20 |
| 19.24 – 19.74 | 4.61 – 4.50 | | 5 – 20 |
| 20.17 – 20.67 | 4.40 – 4.30 | | 30 – 70 |
| 22.73 – 23.23 | 3.91 – 3.82 | | 0 – 15 |
| 24.04 – 24.54 | 3.70 – 3.63 | B* | 20 – 60 |
| 24.39 – 24.89 | 3.65 – 3.58 | | 30 – 60 |
| 25.47 – 25.97 | 3.50 – 3.43 | | 100 – 40 |

*Broad peak

## TABLE 1

Product after calcination at 550°C for 16 hours

| 2-theta | d (Angstroms) | $I/I_0$ |
|---------|---------------|---------|
| 8.18 | 10.81 | 100 |
| 10.19 | 8.68 | 20 |
| 12.79 | 6.92 | 25 |
| 16.36 | 5.42 | 10 |
| 19.48 | 4.56 | 5 |
| 20.42 | 4.35 | 43 |
| 22.98 | 3.87 | 5 |
| 24.29 | 3.67 | 31 |
| 24.64 | 3.61 | 40 |
| 25.72 | 3.46 | 29 |

TABLE 2

Product as synthesised

| d | $I/I_0$ |
|---|---|
| 11.26 | 40 |
| 10.10 | 30 |
| 9.85 | 15 |
| 7.48 | 8 |
| 7.11 | 5 |
| 6.74 | 5 |
| 6.39 | 10 |
| 6.05 | 10 |
| 5.73 | 8 |
| 5.59 | 9 |
| 5.15 | 3 |
| 5.03 | 6 |
| 4.62 | 7 |
| 4.48 | 10 |
| 4.37 | 10 |
| 4.27 | 11 |
| 4.10 | 7 |
| 4.02 | 7 |
| 3.86 | 100 |
| 3.76 | 35 |
| 3.73 | 45 |
| 3.69 | 30 |
| 3.49 | 10 |

Claims:

1. A porous crystalline zincosilicate of the following molar oxide composition:

$$1.8 \pm 0.5 \ M_{2/n}O:ZnO:xSiO_2:yH_2O:zQ$$

wherein M is at least one cation which has a valency of n, x is at least 10, $H_2O$ is water of hydration additional to water notionally present when M is H, y/x is between 0 and 5, Q is a template used in the synthesis of the zincosilicate, and z is 0–20, and wherein the zincosilicate in the calcined hydrogen-form has an X-ray diffraction pattern substantially as set forth in Table A of the specification.

2. A zincosilicate according to claim 1 wherein the zincosilicate product or the hydrogen-form thereof is ion-exchanged, mixed and/or impregnated with compounds of any one of the metals or groups of metals belonging to Groups IB, IIB, IIIA, IVA, VA, VIB, VIIB and VIII according to the Periodic Table due to Mendeleef.

3. A zincosilicate according to claim 2 wherein the metals or groups of metals are selected from copper, silver, zinc, aluminium, gallium, indium, thallium, lead, antimony, bismuth, chromium, molybdenum, tungsten, manganese, iron, cobalt, nickel, ruthenium, rhodium, palladium, iridium, platinum, rhenium, thorium and the rare earth metals.

4. A process for producing zincosilicates claimed in any one of claims 1 to 3 said process comprising forming an initial mixture containing a source of silica, a source of zinc oxide, a source of alkali metal(s), water and a template, mixing them together while maintaining the mixture at a temperature between 0 to 100°C until a homogeneous gel is formed and crystallising the mixture so-formed at a temperature above 70°C, for a period of at least 2 hours.

14

5. A process according to claim 4 wherein the silica to alumina mole ratio in the initial mixture is greater than 10:1, the free alkali(s) hydroxide to water mole ratio, defined as:

$$\frac{[(\text{Number of moles of total alkali metal(s)}) - (\text{Number of moles of alkali metal(s) required to convert zinc oxide present to alkali metal zincate(s), i.e. } M_2ZnO_2)]}{\text{Number of moles of water present}}$$

is less than 1:10, the mole ratio of silica to free alkali metal(s) hydroxide is greater than 5:1, and the mole ratio of water to silica is less than 500:1.

6. A process according to claims 4 or 5 wherein the source of silica is selected from sodium silicate, silica gel, silica sol and silicic acid.

7. A process according to any one of the preceding claims 4 to 6 wherein the source of zinc is an inorganic salt, oxide or hydroxide thereof.

8. A process according to any one of the preceding claims 4 to 7 wherein the template is selected from one or more the following:

(a) an alkene diamine or a dialkenetriamine or a polyalkylene polyamine,

(b) an alkanolamine selected from mono-, di- and tri-alkanol amine and in which the alkanol group is derived from ethanol, propanol or butanol,

(c) ammonia, and

(d) an alkylene glycol, a $C_1-C_6$ polyol or a polyoxyalkylene glycol in which the alkylene groups is ethylene, propylene or butylene.

9. Zincosilicates as claimed in anyone of the preceding claims whenever used, whether or not impregnated and/or ion-exchanged, admixed, supported or bound with other metal compounds, as catalysts for any of the following reactions: alkylation, dealkylation or transalkylation of aromatics; dehydrocyclodimerisation; aromatisation; isomerisation; dehydrogenation; hydrogenation; cracking; hydrocracking; cyclisation; oligomerisation; polymerisation; etherification and dehydration reactions.

0124998

10. Zincosilicates as claimed in any one of the preceding claims 1 to 8 whenever used whether or not impregnated and/or ion-exchanged, admixed, supported or bound with other metal compounds, as catalysts for the conversion of carbon monoxide/hydrogen mixtures to hydrocarbons.